Europäisches Patentamt

European Patent Office

Office européen des brevets

(19)

(11) Publication number: **0 026 170**

**B1**

(12) **EUROPEAN PATENT SPECIFICATION**

(45) Date of publication of patent specification: 03.08.83

(21) Application number: 79900124.3

(22) Date of filing: 25.01.79

(86) International application number:
PCT/SE79/00018

(87) International publication number:
WO 80/01608 07.08.80 Gazette 80/18

(51) Int. Cl.³: **G 01 K 7/00, H 01 C 1/00**
**//H01C1/14**

(54) AN APPARATUS FOR MEASURING TEMPERATURE.

(43) Date of publication of application:
08.04.81 Bulletin 81/14

(45) Publication of the grant of the patent:
03.08.83 Bulletin 83/31

(84) Designated Contracting States:
CH DE FR GB LU SE

(56) References cited:
DE - A - 2 261 531
DE - B - 2 060 610
FR - A - 2 105 486
SE - A - 78 030 467
US - A - 3 646 494

(73) Proprietor: Crafon Medical AB
Box 10101
S-220 10 Lund (SE)

(72) Inventor: HANSSON, Ingvar John Magne
Fagottgränd 2
S-245 00 Staffanstorp (SE)
Inventor: HAKANSSON, Bo Häkan
Astrakanvägen 6
S-223 56 Lund (SE)
Inventor: IGEFJORD, Karl Magnus Gunnar
Agronomvägen 29
S-230 50 Bjärred (SE)
Inventor: WALL, Berth-Ove Gunnar
Ryttmästarevägen 5
S-230 50 Bjärred (SE)

(74) Representative: Boberg, Nils Gunnar Erik
Gambro AB Patent Department Box 10101
S-220 10 Lund (SE)

Courier Press, Leamington Spa, England

An apparatus for measuring temperature

The present invention relates to an apparatus for measuring temperature according to the first part of claim 1. Such an apparatus is known from DE—A—2 261 531.

The apparatus according to the invention is primarily intended to be used for medical temperature measurement. Consequently, one aspect of the invention is to make the apparatus so simple and cheap that it may be disposed of after use, that is to say that it does not have to be reused.

At the same time, however, it should be possible to manufacture the apparatus with such precision that the reader can rely with great certainty on the read-off values, this being, clearly, of the greatest importance precisely in medical use.

However, it is clear to a person skilled in the art that the apparatus according to the invention may be used in other contexts, for example, in pure industrial application in which a simple and inexpensive but nevertheless reliable reading-off of temperature is desired.

Background art

German Patent Application 28 10 105 and the two PCT Applications PCT/SE78/00012 (WO 80/00191) and PCT/SE78/00013 (WO 80/000192) describe different embodiments of an apparatus similar to that according to the invention and how the apparatus according to the invention may be used. The concept forming the basis of the present invention is, in this instance, int. al. to realize such an apparatus, but of a simpler type and adapted to a simple manner of manufacture.

In the German Patent Application 28 15 003 there are described different trimming processes for apparatuses similar to that according to the invention. Such trimming process could well be used for trimming the apparatus according to the invention. Preferably however, use is made instead of an assortment of the type described in EP—A—0 014 818.

Description of the invention

The apparatus according to the invention is characterized in that said mutually offset holes are situated one in each layer in front of the conductors without overlapping each other whereby the resulting non-insulated part of each conductor may easily be connected from a different side of the apparatus to the corresponding sensing terminal in said read-off unit.

The above mentioned construction permits a very simple manner of manufacture which will be described in greater detail below under the title "Preferred manner of manufacture".

Preferably, the two insulated layers consist of plastics-coated paper which may easily be thermally sealed to mutual contact and, respectively, to contact with other materials.

In order to increase the possibilities of rapid read-off, the two insulating layers present holes suitably located in register with each other and in register with the sensor. In order in such an event, to prevent shortcircuiting when the apparatus is used in wet or humid atmosphere, for example, in the mouth of patient, the sensor and the hole in register therewith are covered by two outer insulating layers which do not, however, cover the mutually offset holes.

The sensor which is used may consist of two thermistors which are each connected by their first terminal to intermediate conductor means and are each connected by their second terminal to the above-mentioned electrical conductors. As a result, the thermistors which are used need not be trimmed. Instead, it is possible, by selection, to choose two thermistors which, in the correct coupling give the desired value of the electric property which was used for measuring the temperatures.

At the same time, handling of the thermistors (which normally are very small) is facilitated. The above-mentioned intermediate conductor means may, for example, consist of a short strip of copper foil or other similar electrically-conductive material. Two such thermistors fixedly retained on one such copper foil are, in this case, easier to handle than separate thermistors.

The apparatus according to the invention is suitably designed in elongate form. The two electric conductors may, in this case, be of substantially the same length as the two elongate insulating layers between which they are located, which are named inner insulating layers below. In such an event, the sensor is placed close to one end, whereas the mutually offset holes are placed proximal to the opposite end of the inner insulating layers. This arrangement makes it possible that the non-insulated parts of the conductors may be grasped by the above-mentioned read-off unit, while the sensor is still located in the mouth of a patient.

As read-off unit, use may be made, for example, of one of those described in PCT Application PCT/SE78/00013 (WO 80/00191).

The outer insulating layers may also, suitably, be of plastics-coated paper or other liquid-tight flexible material. They can, in this context, extend out over one end of the two inner elongate insulating layers so that they also insulate the ends of the conductors located therebetween. This end of the apparatus, that is to say at which the sensor is located, may be rounded-off without exposing the electric conductors. If, at the same time, the materials for the above-mentioned conductors and inner and outer insulating layers are selected such that high flexibility is imparted to the apparatus in its entirety, the apparatus will be particularly suited for temperature measurement in, for example, the mouth of a patient where such properties are required.

By using plastics-coated paper for both the inner insulating layers and the outer insulating layers, the two inner layers may be mutually combined, both between and outside the electric conductors disposed in parallel, at the same time as the outer insulating layers may be combined, on the one hand mutually and on the other hand with the two inner insulating layers.

Brief description of the drawings

Fig. 1 shows a preferred embodiment of the apparatus according to the invention, certain parts of the different material layers having been removed.

Fig. 2 is an elevation of the same apparatus.

Fig. 3 is an enlargement of the forward end of the apparatus.

Fig. 4 shows an alternative embodiment of the sensor which is used in the apparatus according to figs. 1—3.

Fig. 5 is intended to illustrate a simple method for realizing the apparatus shown in figs. 1—3.

Fig. 6 shows, finally, one of the material layers used in the realization according to fig. 5.

Preferred embodiment of the invention

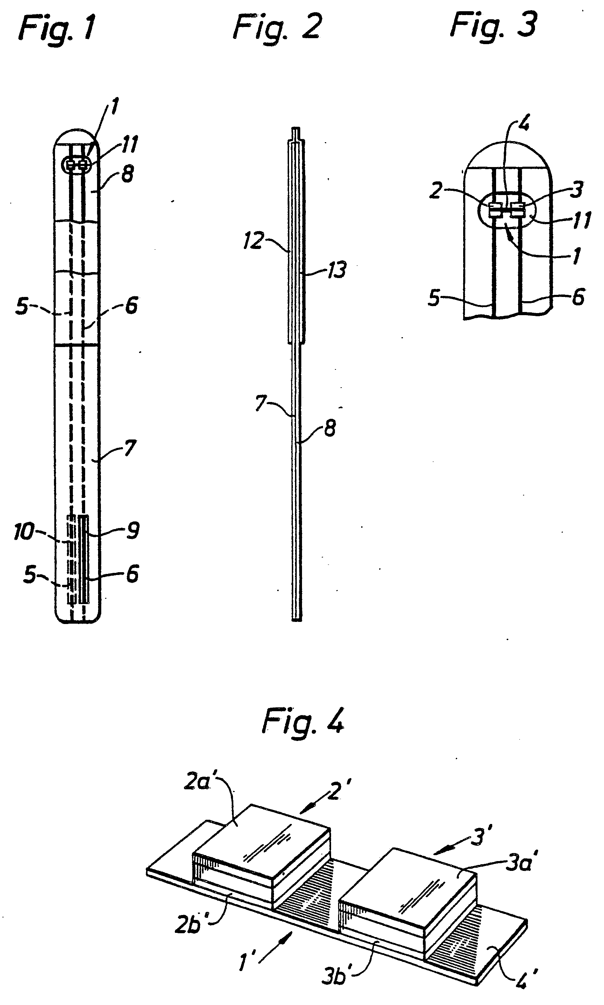

The apparatus shown as an example comprises, thus, a temperature-sensitive sensor which is designated in its entirety with 1 in fig. 1 and 3 and 1', respectively, in fig. 4. This sensor consists, according to figs. 1—3 of two thermistors 2 and 3 which are interconnected via intermediate conductor means 4. In fig. 4, the thermistors are, instead, designated 2' and 3', respectively, whereas the intermediate conductor means consists of a copper foil which is designated 4'. The terminals of the one thermistor are, here, designated 2a' and 2b', whereas the terminals of the second thermistor are designated 3a' and 3b'.

Furthermore, the two thermistors 2 and 3 are connected to electric conductors 5 and 6, respectively. In the embodiment according to fig. 4, the corresponding conductors are connected to the terminals 2a' and 3a'.

The two electric conductors 5 and 6 are encapsulated between two inner insulating layers 7 and 8 which present offset holes 9, 10, respectively, each in register with their respective conductors 6, 5, respectively. As a result, these two conductors 6 and 5 are exposed through the holes 9 and 10.

The two inner insulating layers 7 and 8 consist suitably of plastics-coated paper, which facilitate manufacture, since heat-sealing may be used to unite the two layers with each other and with other materials.

The two insulating layers 7 and 8 present, furthermore, holes 11 located in register with each other and with the sensor.

The sensor 1 and the holes 11 located in register therewith are covered by two outer insulating layers 12 and 13. These outer layers are provided only along the forward end of the apparatus and, thus, do not cover the mutually offset holes 9 and 10. Thanks to those outer layers the apparatus according to this embodiment of the invention may be used in a humid environment.

As is most clearly apparent from fig. 1, the two electric conductors 5 and 6 are substantially of the same length as the two elongate inner insulating layers 7 and 8, between which they are located, the sensor 1 being located proximal to one end which, as above and in the following discussion, will be designated as the forward end of the apparatus, whereas the mutually offset holes 9 and 10 are located proximal to the opposite ends of the inner insulating layers.

The two outer insulating layers 12 and 13 extend out over the forward end of the two inner insulating layers, such that they also insulate the ends of the conductors 5 and 6 located therebetween. As a result, this forward end may be rounded-off without exposing the conductors.

Preferred manner of manufacture

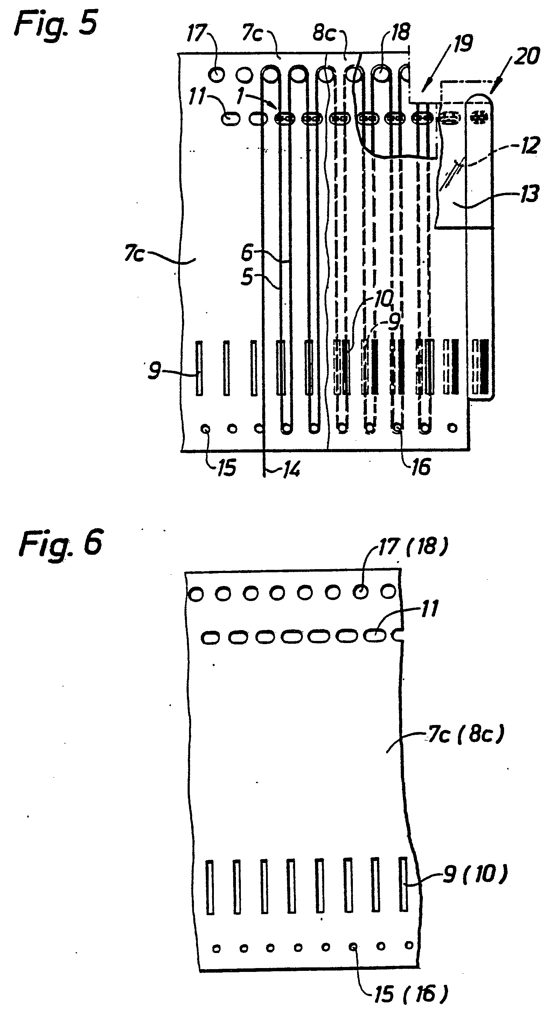

The apparatus according to the invention is suitably manufactured in the manner which is illustrated in greater detail by figs. 5 and 6. A conducting means 14, for example a thin copper wire, is led in zig-zag formation between the two paper webs 7c and 8c. These webs are synchronically led through punched holes 15, 16, 17 and 18 which, for example, may run over sprockets or the like. Both of the webs are provided with holes 11 which, as a result of the synchronic advancement, will be located in register with each other. In register with these holes 11, the conductors 5 and 6 formed by the wire 14 will also be exposed, to which conductors the sensor 1 is connected. Thereafter, the two outer strip portions of the webs 7c and 8c with the holes 15, 16, 17 and 18 may be cut off. This is intimated at the arrow 19. Thereafter, the outer insulating layers 12 and 13 are applied, which also suitably is effected in the form of two webs. For the sake of simplicity however, no such complete webs are shown in fig. 5. Finally, the forward end of the apparatus is rounded-off by punching, this suitably being effected in conjunction with the punching-out in its entirety of the apparatus from the produced material web.

Fig. 5 illustrates the manner of manufacture, naturally schematically, in highly concentrated state. In practice, the various manufacturing operations are effected by means of different devices in completely separate processes, for example, in separate stations along a material web of greater length, this being constructed gradually.

Finally, fig. 6 shows a material web which may constitute one of the material webs 7c and 8c, which differ from each other only through the location of the holes 9 and 10, respectively. The holes 17 and 18, and 15 and 16, respectively are, thus, identical, at the same time as both webs contain holes 11.

The plastics-coated paper layers 7 and 8 may be replaced by layers of waxed paper with, for example, a hotmelt coating on one side for the purposes of unification. Alternatively, they may be replaced by normal paper without moisture insulation, since this may be provided by means of outer layers 12 and 13. The sealing may, in this case, be realized with the assistance of hotmelt, adhesive or other suitable binder. Please see also EP—A—0 014 818, and the above-mentioned patent publications to which reference is made.

## Claims

1. Apparatus for measuring temperature comprising a temperature-sensitive sensor (1, 1') whose electric properties, for example resistance, vary with the temperature, for example a thermistor (2, 2', 3 or 3') which is connected to two electric conductors (5, 6) which, in turn, may be connected to a read-off unit for reading off the values of current or voltage corresponding to the temperature, wherein said electric conductors (5, 6) are disposed between two insulating layers (7, 8) presenting for the connection to said read off unit mutually offset holes (9, 10) each in register with one of said conductors, characterized in that said mutually offset holes (9, 10) are situated one in each layer without overlapping each other in front of the conductors whereby the resulting non-insulated part of each conductor may easily be connected from a different side of the apparatus to the corresponding sensing terminal in said read-off unit.

2. The apparatus as recited in claim 1, wherein both of the insulating layers (7, 8) consist of plastic-coated paper.

3. The apparatus as recited in claim 1, wherein the two insulating layers (7, 8) present one hole (11) each located in register with that of the other layer and in register with the sensor (1).

4. The apparatus as recited in claim 3, wherein said sensor (1) and said holes (11) located in register therewith are covered by two outer insulating layers (12, 13) which do not cover said mutually offset holes (9, 10).

5. The apparatus as recited in any one of the preceding claims, wherein said sensor (1) consists of two thermistors (2, 3; 2', 3') which are connected each with their first terminal (2b', 3b') to intermediate conductor means (4') and are connected each with their second terminal (2a', 3a') to a corresponding one of said electric conductors (5, 6).

6. The apparatus as recited in claim 5, wherein said intermediate conductor means consists of a short strip (4') of copper foil or other similar electrically-conductive material.

7. The apparatus as recited in claim 4, wherein both the electric conductors (5, 6) are of substantially the same length as the two elongated insulating layers (7, 8) between which they are located, said sensor (1) being located proximal to one end, and said mutually offset holes (9, 10) being located proximal to the opposite end of said insulating layers (7, 8).

8. The apparatus as recited in claim 7, wherein said outer insulating layers (12, 13) extend out over one end of the two elongated insulating layers (7, 8) such that they also insulate the ends of said conductors (5, 6).

9. The apparatus as recited in claim 8, wherein said outer insulating layers (12, 13) consist of plastics-coated paper or other liquid-tight, flexible material.

10. The apparatus as recited in claim 7, wherein that end at which the sensor (1) is located, is rounded-off.

11. The apparatus as recited in any one of the preceding claims, wherein the materials for said conductors (5, 6), said insulating layers (7, 8) and said outer insulating layers (12, 13), respectively, are selected such that the apparatus in its entirety has high flexibility, suited for temperature measurement in, for example, the mouth of a patient.

12. The apparatus as recited in claim 4, wherein the both insulating layers (7, 8) are mutually united both between and outside the electric conductors (5, 6) disposed in parallel, and wherein said outer insulating layers (12, 13) are united, on the one hand mutually, on the other hand with said two insulating layers (7, 8).

## Patentansprüche

1. Apparat zum Messen der Temperatur mit einem temperaturempfindlichen Sensor (1, 1'), dessen elektrische Eigenschaften, wie z.B. Widerstand, mit der Temperatur variieren, z.B. ein Thermistor (2, 2', 3 oder 3') der mit zwei elektrischen Leitern (5, 6) verbunden ist, die ihrerseits mit einer Ableseeinheit zum Ablesen der Strom- oder Spannungswerte verbunden sein können, welche der Temperatur entsprechen, wobei die elektrischen Leiter (5, 6) zwischen zwei Isolierschichten (7, 8) angeordnet sind, welche für die Verbindung mit der Ableseeinheit gegenseitig versetzte Löcher (9, 10) aufweisen, die jeweils in Register mit einem der Leiter angeordnet sind, dadurch gekennzeichnet, daß die gegenseitig versetzten Löcher (9, 10) jeweils eines in jeder Schicht angeordnet sind, ohne einander zu überlappen, und zwar vor den Leitern, wodurch der sich ergebende, nicht isolierte Teil jedes Leiters leicht von einer unterschiedlichen Seite des Apparates mit dem entsprechenden Abfühlanschluß in der Ableseeinheit verbunden werden kann.

2. Apparat nach Anspruch 1, dadurch gekennzeichnet, daß beide Isolierschichten (7, 8) aus mit Kunststoff beschichtetem Papier bestehen.

3. Apparat nach Anspruch 1, dadurch gekennzeichnet, daß die zwei Isolierschichten (7, 8) jeweils ein Loch (11) aufweisen, welches in registerhaltiger Lage zu dem der anderen Schicht und in registerhaltiger Lage zum Sensor (1) angeordnet ist.

4. Apparat nach Anspruch 3, dadurch gekennzeichnet, daß der Sensor (1) und die mit diesem registerhaltig angeordneten Löcher (11) durch zwei äußere Isolierschichten (12, 13) abgedeckt sind, welche die gegenseitig versetzten Löcher (9, 10) nicht abdecken.

5. Apparat nach einem der vorhergehenden Ansprüche, dadurch gekennzeichnet, daß der Sensor (1) aus zwei Thermistoren (2, 3; 2', 3') besteht, die jeweils mit ihrem ersten Anschluß (2b', 3b') mit Zwischenleitereinrichtungen (4') verbunden sind und jeweils mit ihrem zweiten Anschluß (2a', 3a') mit einem entsprechenden elektrischen Leiter (5, 6) verbunden sind.

6. Apparat nach Anspruch 5, dadurch gekennzeichnet, daß die Zwischenleitereinrichtung aus einem kurzen Streifen (4') Kupferfolie oder anderem ähnlichen elektrisch leitenden Material besteht.

7. Apparat nach Anspruch 4, dadurch gekennzeichnet, daß beide elektrische Leiter (5, 6) im wesentlichen dieselbe Länge haben wie die zwei länglichen Isolierschichten (7, 8), zwischen welchen sie angeordnet sind, daß der Sensor (1) nahe einem Ende angeordnet ist und daß die gegenseitig versetzten Löcher (9, 10) nahe dem entgegengesetzten Ende der Isolierschichten (7, 8) angeordnet sind.

8. Apparat nach Anspruch 7, dadurch gekennzeichnet, daß die äußeren Isolierschichten (12, 13) über ein Ende der zwei länglichen Isolierschichten (7, 8) derart hinauslaufen, daß sie auch die Enden der Leiter (5, 6) isolieren.

9. Apparat nach Anspruch 8, dadurch gekennzeichnet, daß die äußeren Isolierschichten (12, 13) aus mit Kunststoff beschichtetem Papier oder anderem flüssigkeitsdichten, flexiblen Material bestehen.

10. Apparat nach Anspruch 7, dadurch gekennzeichnet, daß dasjenige Ende, an welchem der Sensor (1) angeordnet ist, abgerundet ist.

11. Apparat nach einem der vorhergehenden Ansprüche, dadurch gekennzeichnet, daß die Materialien der Leiter (5, 6), der Isolierschichten (7, 8) bzw. der äußeren Isolierschichten (12, 13) derart ausgewählt sind, daß der Apparat in seiner Gesamtheit eine hohe Flexibilität hat und geeignet für das Temperaturmessen in beispielsweise dem Mund eines Patienten ist.

12. Apparat nach Anspruch 4, dadurch gekennzeichnet, daß die beiden Isolierschichten (7, 8) gegenseitig sowohl zwischen als auch außerhalb der parallel angeordneten elektrischen Leiter (5, 6) vereinigt sind; und daß die äußeren Isolierschichten (12, 13) einerseits gegenseitig und andererseits mit den zwei Isolierschichten (7, 8) vereinigt sind.

**Revendications**

1. Appareil de mesure de la température, comprenant un détecteur (1, 1') sensible à la température dont les propriétés électriques, par exemple la résistance, varient avec la température, et constitué par exemple par une thermistance (2, 2', 3 ou 3') qui est reliée à deux conducteurs électriques (5, 6) qui peuvent eux-mêmes être raccordés à un dispositif indicateur pour la lecture des valeurs de courant ou de tension correspondant à la température, lesdits conducteurs électriques (5, 6) étant disposés entre deux couches isolantes (7, 8) comportant pour le raccordement au dispositif indicateur des trous mutuellement décalés (9, 10) alignés chacun avec l'un des conducteurs, caractérisé en ce que ces trous mutuellement décalés (9, 10) sont situés dans chaque couche, sans chevauchement de l'un sur l'autre, en face des conducteurs, de sorte que la partie non isolée résultante de chaque conducteur peut facilement être raccordée, d'un côté différent de l'appareil, à la borne de détection correspondante dans le dispositif indicateur.

2. Appareil suivant la revendication 1, caractérisé en ce que les deux couches isolantes (7, 8) sont formées de papier revêtu de matière plastique.

3. Appareil suivant la revendication 1, caractérisé en ce que les deux couches isolantes (7, 8) comportent chacune au moins un trou (11) aligné avec celui de l'autre couche et avec le détecteur (1).

4. Appareil suivant la revendication 3, caractérisé en ce que le détecteur (1) et les trous (11) situés en alignement avec celui-ci sont recouverts par deux couches isolantes extérieures (12, 13), qui ne recouvrent pas les trous mutuellement décalés (9, 10).

5. Appareil suivant l'une des revendications précédentes, caractérisé en ce que le détecteur (1) est constitué de deux thermistances (2, 3; 2', 3') qui sont raccordées chacune par leur première borne (2b', 3b') à des moyens conducteurs intermédiaires (4') et qui sont raccordées chacune par leur deuxième borne (2a', 3a') à un conducteur correspondant desdits conducteurs électriques (5, 6).

6. Appareil suivant la revendication 5, caractérisé en ce que les moyens conducteurs intermédiaires sont constitués par une courte bande (4') de feuille de cuivre ou autre matière semblable, électriquement conductrice.

7. Appareil suivant la revendication 4, caractérisé en ce que les deux conducteurs électriques (5, 6) sont sensiblement de même longueur que les deux couches isolantes allongées (7, 8) entre lesquelles ils sont placés, le détecteur (1) étant situé près d'une extrémité et les trous mutuellement décalés (9, 10) étant situés près de l'extrémité opposée des couches isolantes (7, 8).

8. Appareil suivant la revendication 7, caractérisé en ce que les couches isolantes extérieures (12, 13) se prolongent sur une extrémité des deux couches isolantes allongées (7, 8), de sorte qu'elles isolent également les extrémités des conducteurs (5, 6).

9. Appareil suivant la revendication 8, caractérisé en ce que les couches isolantes extérieures (12, 13) sont en papier revêtu de matière plastique, ou en autre matière souple et étanche aux liquides.

10. Appareil suivant la revendication 7, caractérisé en ce que l'extrémité du côté de laquelle se trouve le détecteur (1) est arrondie.

11. Appareil suivant l'une des revendications précédentes, caractérisé en ce que les matières pour les conducteurs (5, 6), les couches isolantes (7, 8) et les couches isolantes extérieures (12, 13), respectivement, sont choisies de façon à ce que l'appareil dans son ensemble possède une flexibilité élevée, appropriée à la mesure de la température dans, par exemple, la bouche d'un malade.

12. Appareil suivant la revendication 4, caractérisé en ce que les deux couches isolantes (7, 8) sont mutuellement reliées, à la fois entre les conducteurs électriques (5, 6) disposés en parallèle et à l'extérieur de ces conducteurs, et en ce que les couches isolantes extérieures (12, 13) sont reliées d'une part mutuellement et d'autre part avec les deux couches isolantes (7, 8).

Fig. 1    Fig. 2    Fig. 3

Fig. 4

0.026 170

**Fig. 5**

**Fig. 6**

2